# EUROPEAN PATENT APPLICATION

(11) **EP 4 420 931 A1**
(43) Date of publication of application: **28.08.2024**
(21) Application number: 24158818.5
(22) Date of filing: 21.02.2024
(51) Int. Cl.: B60R 3/02

(54) **MOTORIZED RETRACTABLE STEP FOR A VEHICLE**

(30) Priority: 22.02.2023 IT 202300003054
(71) Applicant: Bode Sud S.p.A., 66041 Atessa (CH) (IT)
(72) Inventor: RUI, Carlo, 66041 ATESSA (CH) (IT)
(74) Representative: Studio Torta S.p.A.

(57) **Abstract**

A retractable step (4) for a vehicle (1) includes a platform (11) to facilitate a user's access to the interior of the vehicle (1), a frame (5) fixable to a lower body portion (2) of the vehicle (1), an articulated mechanism (12) comprising at least a first rod (15) and a second rod, a motor (13) carried by the frame (5) and configured to deliver power, a transmission (14) configured to transmit the power delivered by the motor (13) to the articulated mechanism (12), such that the articulated mechanism (12) moves the platform (11) relative to the frame (5), wherein the transmission (14) comprises a shaft (19) rotatably supported by the frame (5) around a first axis (R1) and coupled to the motor (13) to be driven into rotation by said power, a crank (22) rotationally coupled to the shaft (19) to be driven into rotation by the shaft (19) around the first axis (R1), and fastening means (23) configured to fasten the crank (22) to the second rod (16) in a releasable manner at a second axis (R6) parallel to and distinct from the first axis (R1).

## Description

### CROSS-REFERENCE TO RELATED APPLICATIONS

This patent application claims priority from Italian patent application no. 102023000003054 filed on February 22, 2023, the entire disclosure of which is incorporated herein by reference.

### TECHNICAL FIELD

The invention relates to a motorized retractable step for a vehicle, such as a camper, and more in particular to an electrically operated retractable step with an improved manual emergency release mechanism.

### STATE OF THE KNOWN ART

As is known, some campers, vans, and/or similar vehicles are provided with a retractable step arranged at an entrance door to facilitate access on board via at least one platform.

In some cases, the step includes an articulated mechanism for moving the platform between a retracted position, in which the platform is housed in a designated compartment below the floor of the camper, and an extracted position, in which the platform protrudes in a cantilevered manner outside the contour of the camper and provides support for access on board.

The articulated mechanism is motorized, i.e. it is operated by a motor of the step, for example an electric motor.

Conveniently, the step can be provided with a manual emergency release mechanism to disengage the articulated mechanism from the motor, i.e. to make the articulated mechanism and the motor independent of each other.

Such a manual emergency release mechanism is useful in particular in the case of a malfunctioning of the motor. Indeed, if the motor should seize up, the platform could also get stuck in the extracted position.

In this latter state, the use of the vehicle becomes dangerous, as the platform stuck in the extracted position could hit people or objects in the vicinity of the vehicle.

Moreover, the step is also not designed for potential stresses associated with a use of the vehicle with the platform stuck in the extracted position.

On the other hand, the emergency release mechanism allows the articulated mechanism to be disengaged from the motor, so that a user can move the platform manually and return it to the retracted position, regardless of the operating state of the motor.

In general, the need is felt for an emergency release mechanism that is improved relative to those that are already known.

More precisely, the need is felt for an emergency release mechanism that is easier to handle, simpler, more intuitive, and with an operation that requires less effort on the part of the user.

In particular, the need is felt to minimize the number of tools required to disengage the articulated mechanism from the motor conveniently and safely.

An object of the invention is to satisfy at least one of the above needs, preferably in a simple and cost-effective manner.

### SUMMARY OF THE INVENTION

The object is achieved by a retractable step according to claim 1.

The dependent claims set forth particular embodiments of the invention.

### BRIEF DESCRIPTION OF THE DRAWINGS

The invention will now be described with reference to the accompanying drawings, which illustrate a non-limiting embodiment example of the invention, wherein:
- Figure 1 is a perspective view of a vehicle provided with a retractable step according to the invention, with parts removed for clarity;
- Figures 2-4 are perspective views of the retractable step according to three distinct operating configurations,

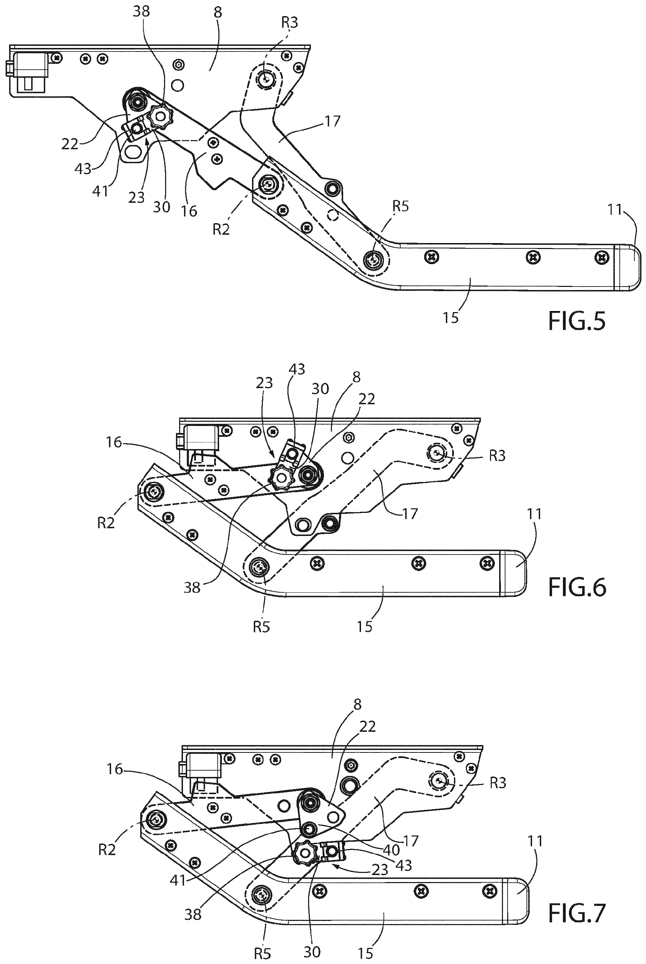

- Figures 5-7 are side views of a portion of the retractable step in the three operating configurations of Figures 2-4,

- Figure 8 is a perspective view of the retractable step in Figure 2, from an opposite viewpoint,

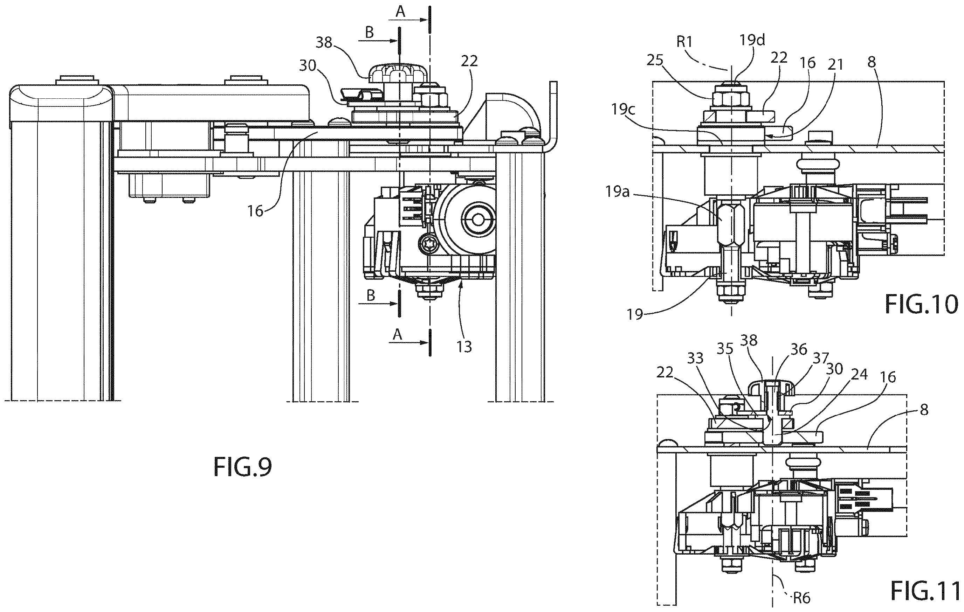

- Figure 9 is a front view of a portion of the retractable step according to the operating configuration of Figure 3,
- Figure 10 is a section view along the plane identified by the line A-A in Figure 9,
- Figure 11 is a section view along the plane identified by the line B-B in Figure 9,

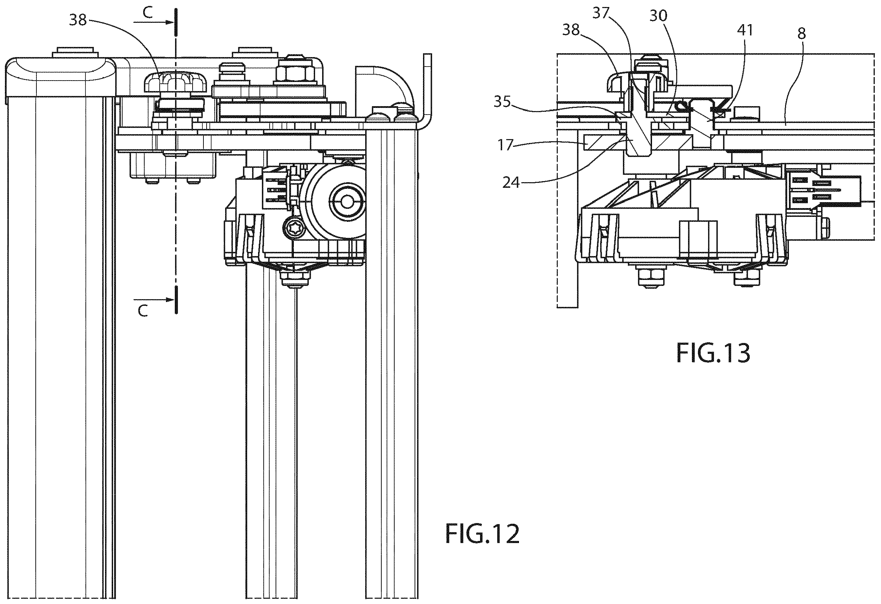

- Figure 12 is a front view of the portion of Figure 9 according to the operating configuration of the retractable step of Figure 4,
- Figure 13 is a section view along the plane identified by the line C-C in Figure 12, and

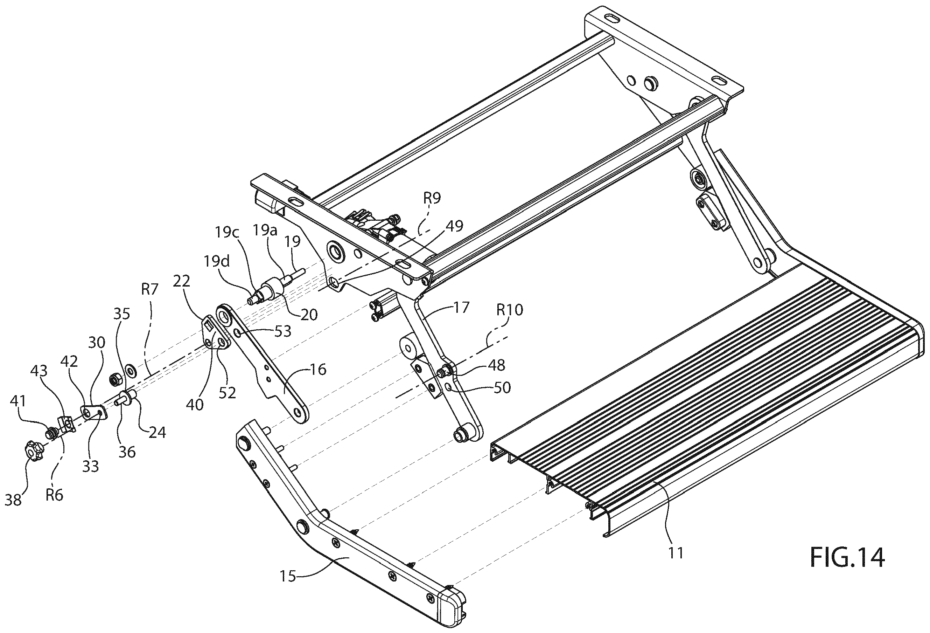

- Figure 14 is an exploded view of the retractable step according to the operating configuration of Figure 2.

### DETAILED DESCRIPTION OF THE INVENTION

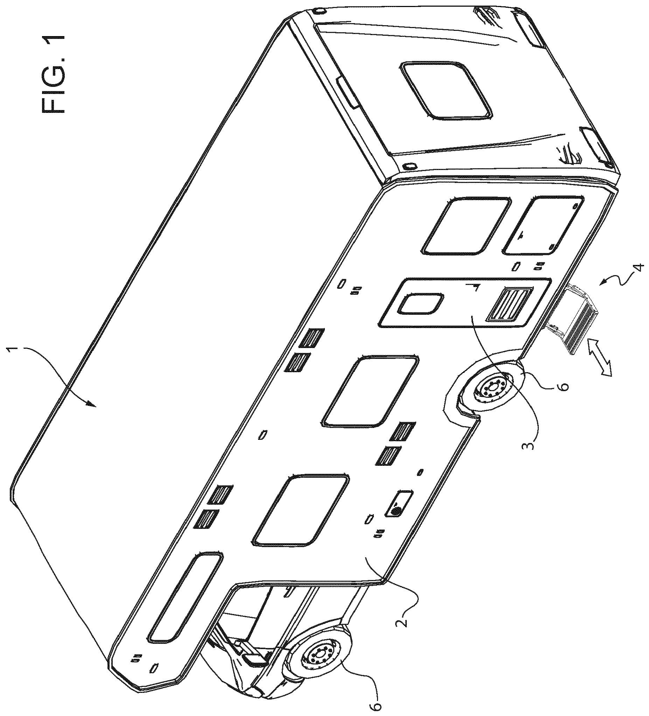

In Figure 1, the reference number 1 indicates, as a whole, a vehicle, in particular a heavy vehicle and more in particular a camper.

The vehicle 1 has a body 2, which internally defines a passenger compartment or cabin that can be accessed by a user.

Moreover, the vehicle 1 comprises a door 3 that can be selectively opened to allow the user to access the passenger compartment or cabin.

Below or at the door 3, the vehicle 1 comprises a retractable step 4 to facilitate a user's access to the interior of the passenger compartment or cabin through the door 3.

The retractable step 4 has a frame 5 fixable to the body 2 or more specifically to a lower portion of the same. The latter faces a road surface relative to which the vehicle 1 is movable, in particular via a plurality of wheels 6 of a known type.

In Figure 1, the retractable step 4 is indeed fastened to the lower portion of the body 2.

The frame 5 comprises two portions respectively comprising or defined by corresponding plates 7 arranged symmetrically with respect to a plane of symmetry transversal to the vehicle 1 or more precisely to a direction of travel or longitudinal axis of the same.

In the illustrated embodiment, the step 4 has a preferably symmetrical design with respect to the aforementioned plane of symmetry, except for some potentially non-symmetrical aspects that can be mentioned in isolation, therefore the following description will be limited to describing only one side of the step 4 with respect to the plane of symmetry, with the indication that the characteristics of the other side are substantially mirrored due to the symmetrical structure of the step 4. Any exceptions will be specifically mentioned where appropriate or necessary.

The plate 7 has a plate portion 8 which extends according to a, in particular vertical, direction, and a plate portion 9 which extends according to another direction transversal or more precisely orthogonal to the previous direction. In other words, the plate portions 8, 9 are transversal or orthogonal to each other.

The plate portion 9 faces the lower portion of the body 2 and is provided with slots 10 to allow the anchoring of the step 4 to the body 2, in particular via fastening elements of a known type and not illustrated, for example threaded elements such as bolts, lag screws and the like, or even potentially non-detachable fastening elements such as rivets, which pass through the slots 10 and couple to the lower portion of the body 2.

The step 4 additionally comprises a platform 11 to facilitate a user's access to the interior of the vehicle 1, an articulated mechanism 12 carried by the frame 5 for moving the platform 11 relative to the frame 5, a motor 13, and a transmission 14 configured to transmit a power delivered by the motor 13 to the mechanism 12, such that the mechanism 12 moves the platform 11.

The motor 13 and the transmission 14 can be non-symmetrical with respect to the aforementioned plane of symmetry, so that they may also be located on only one side of the step 4, as in the illustrated embodiment.

The mechanism 12 preferably has a single degree of freedom, so that the position of the platform 11 with respect to the frame 5 is determined by the value of a variable representative of said single degree of freedom, for example an angle of rotation around an axis, according to a biunivocal relationship.

The mechanism 12 has at least two rods or levers 15, 16, of which the rod 15 is attached to the platform 11, for example directly or via fastening elements.

The rod 16 is generically coupled to both the frame 5 and to the rod 15, so that the rod 15 and thus the platform 11 are also carried by the frame 5. More in particular, although not strictly necessarily, the rod 16 has two ends 16a, 16b respectively hinged to the frame 5 and to the rod 15, in particular directly.

The end 16a is rotatable with respect to the frame 5 around an axis R1, which therefore defines a hinge axis for the rod 16.

The rotation angle of the rod 16 around the axis R1 can define, for example, the variable representative of the single degree of freedom of the mechanism 12.

The rods 15, 16 are hinged to each other around a hinge axis R2, in particular parallel to the axis R1. According to the axis R1 or R2, the rod 16 is arranged between the portion plate 8, or more generally the frame 5, and the rod 15.

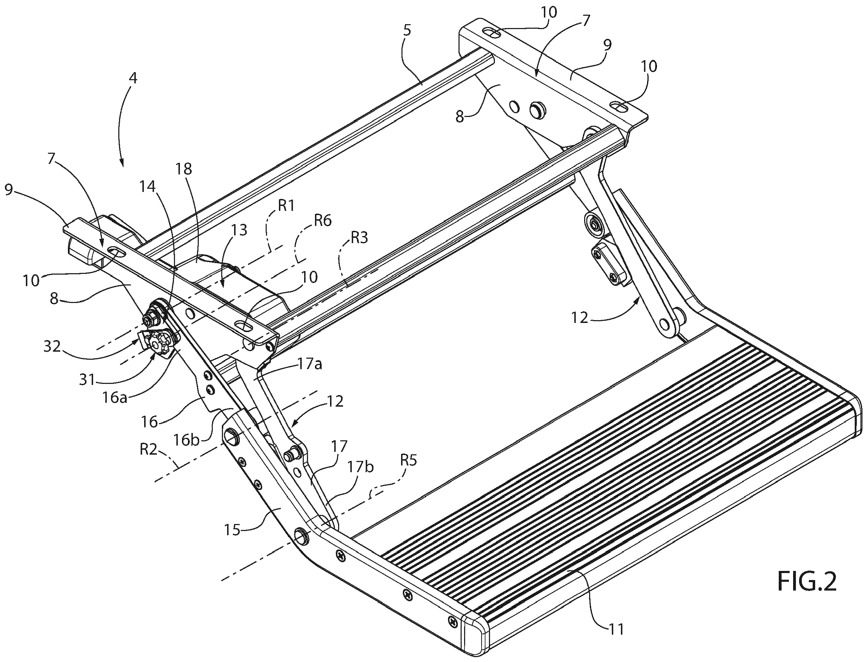

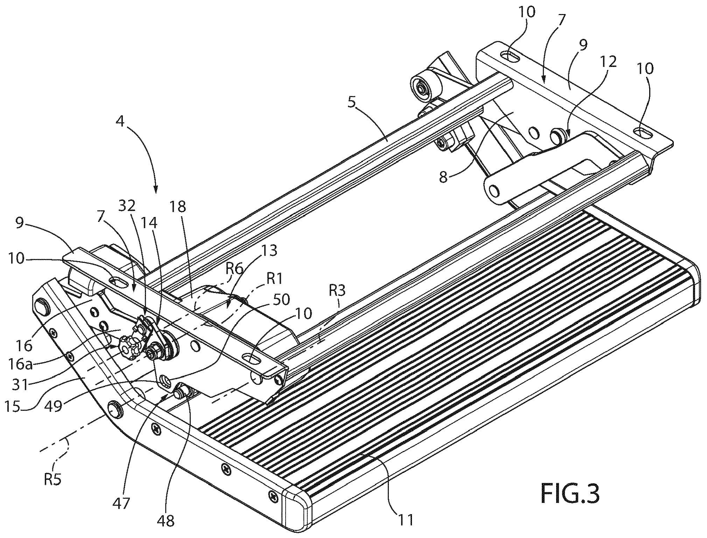

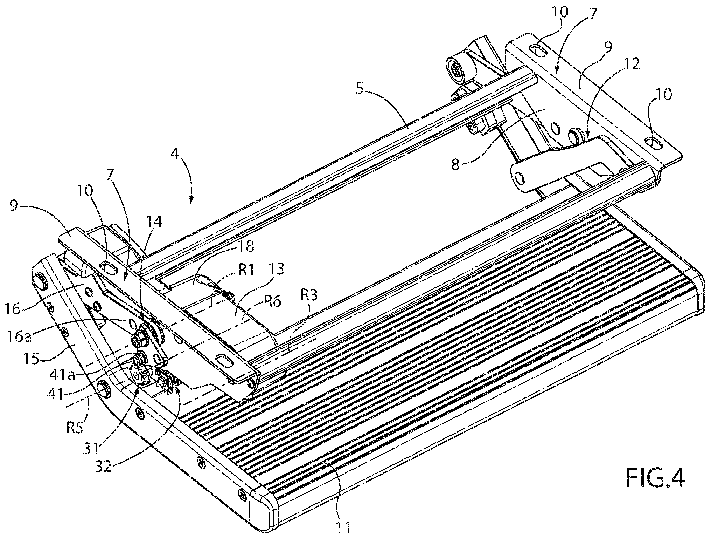

The mechanism 12 is movable in order to arrange or move the platform 11 between two configurations relative to the vehicle 1, for example two extreme and opposite configurations, with particular reference to the variable representative of the degree of freedom of the mechanism 12. The two configurations comprise an extracted configuration (Figure 2), in which the platform 11 protrudes laterally relative to the body 2, in particular below the door 3, to facilitate access to the passenger compartment or cabin. Moreover, the two configurations comprise a retracted configuration (Figures 3, 4), in which the platform 11 is below the body 2, i.e. does not protrude laterally relative to the body 2.

Moreover, the mechanism 12 specifically comprises a further rod or lever 17 having two ends 17a, 17b respectively hinged to the frame 5 and to the platform 11 or to the rod 15, for example directly. In the illustrated embodiment, the end 17b is directly hinged to the rod 15.

In this manner, the frame 5 together with the rods 15, 16, 17 form an articulated quadrilateral mechanism forming part of the mechanism 12 or defining the mechanism 12.

The ends 17a, 17b are respectively hinged to the frame 5 and to the rod 15 around corresponding hinge axes R3, R5 parallel to the axes R2, R1.

Conveniently, the plate portion 8 extends or is arranged between the rods 16, 17, so that, in other words, the rods 16, 17 straddle the plate portion 8 or more generally the frame 5.

This applies in particular according to a direction parallel to the axis R1.

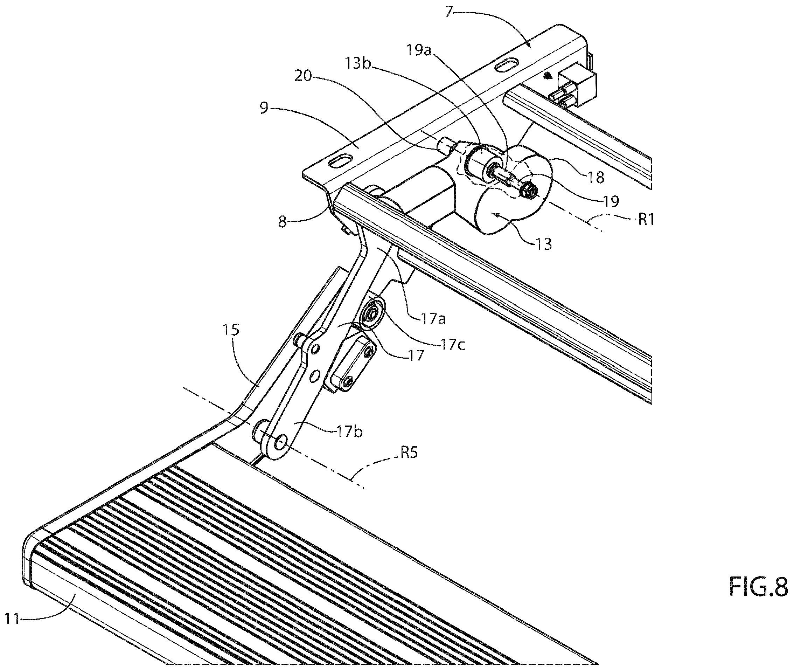

Preferably, the mechanism 12 comprises a stopping element 17c (Figure 8) that is fixed with respect to one or both of the rods 15, 16, in particular at the axis R2. The stopping element 17c protrudes from one or both the rods 15, 16 parallel to the axis R2 toward the rod 17.

In the extracted configuration, the stopping element 17c is arranged in contact with the rod 17 in a position that prevents the movement of the rod 17 towards the retracted configuration. Indeed, such a movement would exert a force on the rods 15, 16 which, however, are controlled by the motor 13.

Therefore, the stopping element 17c has the function of stopping the mechanism 12 in the extracted configuration, even with a user's weight on the platform 11.

In the extracted configuration, the rod 17 is arranged between the platform 11 and the stopping element 17c.

The motor 13 comprises an outer casing 18 fastened to the frame 5, in particular at the plate portion 8, more in particular on the side of the rod 17.

Therefore, preferably, the plate portion 8 or more generally the frame 5 is arranged between the casing 18 and the rod 16, in particular in a direction parallel to the axis R1.

The motor 13 is in particular an electric motor and can thus be powered with electric current, for example from a source in the vehicle 1, such as a battery or a generator.

Like all motors, the motor 13 has a stator portion that is fixed with respect to the casing 18 and a movable portion, in particular a rotor portion, i.e. that is rotatable around an axis with respect to the stator portion. The rotor portion and the stator portion are contained within the casing 18.

The motor 13 is configured to emit or deliver power, precisely by rotating the rotor portion.

The transmission 14 comprises at least one shaft 19 supported in a rotatable manner by the frame 5 around an axis, in particular parallel to and more in particular coinciding with the axis R1.

The shaft 19 is coupled to the motor 13 or more precisely to its rotor portion in order to be driven into rotation by the power delivered by the motor 13, i.e. by virtue of the corresponding rotation of the rotor portion transmitted to the shaft 19 by suitable transmission means or devices.

In the present case, the shaft 19 is coupled to the motor 13 or more precisely to the rotor portion via conjugate or splined profiles. In particular, the shaft 19 is provided with a first portion 19a with a quadrilateral cross section coupled to a corresponding hub 13b of the motor 13. The hub 13b is rotatable around the axis R1 by means of the power delivered by the motor 13. The rotation of the hub is thus transmitted directly to the shaft 19, so that the shaft 19 rotates rigidly together with the hub.

The shaft 19 is supported by the frame 5 or more precisely by the plate portion 8 via a bearing, in particular defined by a sliding-friction bearing or bushing 20.

The bushing 20 can be considered part of the frame 5 or of the transmission 14.

The bushing 20 has a radially innermost surface, which is radially in contact with a portion 19b of the shaft 19. The portion 19b preferably has a circular cross section.

Preferably, the bushing 20 also has a radially outermost surface 21 which supports the rotation of the rod 16 around the axis R1.

Moreover, the transmission 14 comprises a crank 22 coupled to the shaft 19, in particular so as to form a rotational couple with the shaft 19. The crank 22 is thus driven into rotation by the shaft 19 around the axis R1, i.e. the axis of the shaft 19 and the hub of the motor 13.

More precisely, the crank 22 is fixed, at least rotationally, to the shaft 19, in particular via a coupling with conjugate or splined profiles between the shaft 19 and the crank 22.

More in particular, the shaft 19 comprises a portion 19c with a quadrilateral cross section coupled to a corresponding hub of the crank 22.

In the illustrated embodiment, the crank 22 has a substantially triangular shape. Here, the term substantially means that the corners of the triangular shape can also be rounded or joined together. In any case, the shape of the crank 22 is not essential, although advantageous, so that it may be different from the one illustrated.

Conveniently, the shaft 19 has a threaded end 19d. The shaft 19, the lever 16, the crank 22 are axially fastened or packed together via a nut 25 screwed to the threaded portion 19d until it is tightened against the crank 22.

According to an aspect of the invention, the crank 22 can be releasably fastened to the lever 16 at an eccentric point or area of the crank 22 relative to the axis R1, i.e. to the axis of rotation of the crank 22. In other words, the step 4 comprises a fastening assembly 23 configured to fasten the crank 22 to the rod 16 in a releasable manner and at an axis R6 parallel to the axis R1 and distinct from the latter.

The axis R6 performs a motion of revolution around the axis R1 in response to a rotation of the crank 22 around the axis R1.

The term releasable is understood here to mean that the components fastened via the fastening assembly 23 can be disconnected or disengaged from each other by detaching the fastening assembly 23 without compromising the operation of the fastening assembly 23 or of the step 4, i.e. without causing a permanent deformation or breakage of the fastening assembly 23 or of the components fastened via the fastening assembly 23.

Preferably, the fastening assembly 23 is manually releasable, i.e. without the aid of tools or solely by means the user's limbs.

More specifically, the fastening assembly 23 comprises a pin 24 configured to be arranged in an insertion position, in which the pin 24 is inserted through the crank 22 and the rod 16 along the axis R6.

Therefore, firstly, the crank 22 and the rod 16 have respective holes 52, 53 having the same radial distance from the axis R1. In other words, the holes can be axially aligned relative to each other along the axis R6, i.e. rendered coaxial to each other.

In particular, at least the hole 52 of the crank 22 is a through hole, while the hole 53 of the rod 16 is preferably a through hole, although not necessarily.

In the insertion position, the pin 24 is inserted along the axis R6 through both of the holes 52, 53, which are coaxial to each other. Preferably, the pin 24 engages substantially the entire radial dimension of the holes 52, 53, thus forming respective shaft-hole couplings. The term substantially refers here to the possible tolerances of the shaft-hole couplings, which are couplings with radial clearance.

In this manner, i.e. in the insertion position, the pin 24 is configured to transmit the rotation of the crank 22 to the rod 16 around the axis R1.

Moreover, the fastening assembly 23 comprises releasable fastening devices configured to fasten the pin 24 in the insertion position in a releasable manner.

Indeed, without these fastening devices or with the fastening devices released or detached, the pin 24 may be extracted axially from the holes 52, 53. The extraction of the pin 24 from the insertion position would disengage the crank 22 from the rod 16 and thus, consequently, the motor 13 from the mechanism 12.

In more detail, the fastening devices comprise a bracket 30, a first fastening device 31, and a second fastening device 32.

The bracket 30 is configured to be crossed by the pin 24 along the axis R6 in the insertion position. In other words, the bracket 30 has a through hole 33 adapted for the passage of the pin 24 in the insertion position along the axis R6.

In particular, the bracket 30 comprises or is defined by a plate to be arranged with the direction of its thickness parallel to the axis R6. The axis of the hole 33 is parallel to the direction of the thickness of the plate.

The fastening device 31 is configured to secure the bracket 30 and the pin 24 to each other in a releasable manner, with the pin 24 passing through the bracket 30 in the insertion position, i.e. passing through the bracket 30, the crank 22, and the rod 16 along the axis R6.

The fastening device 32 is configured to fasten the bracket 30 to the crank 22 in a releasable manner.

In this manner, the pin 24 can be fastened axially along the axis R6 in the insertion position with the reciprocal fastening of the bracket 30 and of the pin 24 in the insertion position via the fastening device 31 and, contemporarily, of the bracket 30 to the crank 22 via the fastening device 32.

In this configuration, which can be defined as an operatimg configuration of the step 4, the pin 24 is not extractable axially from the holes of the crank 22 and the rod 16, so that the crank 22 is forced to rotate together with the rod 16 around the axis R1, so that the transmission 14 effectively transmits the power of the motor 13 to the mechanism 12.

Here, i.e. when the fastening devices 31, 32 respectively fasten the bracket 30 to the pin 24 in the insertion position and the bracket 30 to the crank 22, the crank 22 is arranged between the bracket 30 and the rod 16, in particular along the axis R6 or the axis R1. More in particular, the crank 22 is interposed directly between the bracket 30 and the rod 16.

Preferably, in the insertion position, the pin 24 comprises an abutment portion 35 configured to rest against the bracket 30 along the axis R6. Specifically, the abutment portion 35 rests axially against the bracket 30 when the pin 24 is fastened to the latter in the insertion position via the fastening device 31.

Moreover, the pin 24 has an insertion portion 36 extending axially, i.e. along the axis R6 in the insertion position, from the abutment portion 35; the insertion portion 36 is configured to pass through the bracket 30 in a through manner along the axis R6 with the pin 24 in the insertion position and with the abutment portion 35 resting against the bracket 30. In other words, here, the insertion portion extends from the abutment portion 35 through the hole 33 of the bracket 30, thus protruding axially relative to said bracket 30.

In practice, the abutment portion 35 and the insertion portion 36 are axially adjacent to each other and have a radial dimension, i.e. specifically a diameter, respectively greater and smaller than that of the hole 33, so that the abutment portion 35 abuts the bracket 30 when the insertion portion 36 passes through the bracket 30 via the hole 33.

The insertion portion 36 has an external thread 37, in particular on the part that is to be arranged so as to be axially protruding relative to the bracket 30.

Conveniently, the fastening device 31 comprises a knob 38, which is internally threaded and configured to mate with the external thread 37 of the pin 24 to tighten the abutment portion 35 against the bracket 30, thus fastening the pin 24 to the bracket 30.

In practice, the knob 38 can be screwed onto the external thread 37 until it is tightened against the bracket 30. Here, the abutment portion 35 is tightened on the bracket 30 axially.

Preferably, the crank 22 comprises a base portion 40 and a body 41 protruding from the base portion 40 along an axis R7 parallel to the axis R6 or the axis R1.

In more detail, the body 41 is a pin provided with a groove 41a at one end; in particular, the groove 41a is annular around the axis R7.

Specifically, the base portion 40 is arranged between the body 41 and the rod 16, along the axis R7. In other words, the body 41 protrudes from the base portion 40 on the side opposite the shaft 19.

The bracket 30 is configured to be passed through by the body 41 along the axis R7. In other words, the bracket 30 has a through hole 42 which can receive the body 41 along the axis R7.

The distance between the holes 33, 42 of the bracket 30 is equal to the distance between the axes R6, R7.

Preferably, the fastening device 32 comprises a clip 43, for example of a known type, configured to secure the bracket 30 to the body 41 via a snap-fit coupling, in particular with the body 41 passing through the bracket 30 or extending through the hole 42 along the axis R7.

In particular, the clip 43 comprises a leaf folded on itself around a folding axis so as to have two leaf portions which face each other and which can be brought together by bending the folding area of the leaf around the folding axis by pushing one leaf portion towards the other leaf portion.

The leaf portions have respective slots arranged opposite each other; moreover, the leaf portions are elastically deformable so that the relative slots expand elastically when forced against the body 41 along the axis R7 towards the base portion 40 to be passed through by said body 41.

Indeed, the slots can slide on the body 41 along the axis R7 with interference, in particular caused by the elastic reactions of the leaf portions.

The elastic reactions are directed radially with respect to the axis R7.

Moreover, the leaf portions are configured to constrict at the groove 41a after having been expanded by forcing the body 41 through the openings along the axis R7, thus snap-fitting onto the body 41 at the groove 41a.

The clip 43 can be disengaged from the body 41 by manually pushing one leaf portion towards the other leaf portion, so as to cause a bending of the leaf around the folding axis and a release of the leaf portions from the groove 41a. In this manner, the slots can be expanded by applying an extraction force to the leaf portions against the body 41 along the axis R7 in a direction away from the base portion 40. The clip 43 can thus be slipped off the body 41.

The bracket 30 can be passed through by the body 41 and arranged between the clip 43 and the crank 22 along the axis R7. In this manner, the bracket 30 is locked axially between the clip 43 and the crank 22.

Preferably, the rod 17 forms, potentially together with the plate portion 8, when the latter is present, a fastening interface 47 when the platform 11 is arranged in the retracted configuration, which is suitable for preventing the step 4 from protruding laterally relative to the vehicle 1.

The fastening interface 47 may not be symmetrical with respect to the aforementioned plane of symmetry.

The fastening interface 47 comprises at least one attachment portion 48, for example analogous to the body 41 in terms of its design and/or function, carried in a fixed manner by the rod 17.

The attachment portion 48 is configured to cooperate with the fastening device 32 to fasten the bracket 30 to the rod 17 or more precisely to the attachment portion 48.

The mode of fastening the bracket 30 to the attachment portion 48 via the fastening device 32 can be analogous to the one already described for fastening the bracket 30 to the body 41.

Moreover, the fastening interface 47 can comprise a hole 49 on one between the plate portion 8 and the rod 17 for accommodating or receiving the pin 24 in a further insertion position; here, in the further insertion position, the pin 24 can then be fastened to the bracket 30 via the fastening device 31.

The hole 49 has an axis R9, while the attachment portion 48 extends along an axis R10.

The distance between the hole 49 and the attachment portion 48, or more precisely the distance between the axes R9, R10, is equal to the distance between the holes 33, 42 of the bracket 30.

Preferably, the fastening interface 47 can comprise an additional hole 50 forming a pair of holes with the hole 49.

The hole 50 is obtained on the other one between the plate portion 8 and the rod 17 with respect to the hole 49.

Moreover, in the retracted configuration, the hole 50 is aligned with the hole 49 along the axis R9, which is parallel to the axis R6 or the axis R1.

The holes 49, 50 can both receive the pin 24 contemporarily in the further insertion position. Here, i.e. in the further insertion position, the pin 24 can be secured to the bracket 30 via the fastening device 31.

The securing of the pin 24 to the bracket 30 in the further insertion position, i.e. through the holes 49, 50, can occur in the same manner as already described for the fastening of the pin 24 to the bracket 30 in the insertion position described in the foregoing, i.e. passing through the holes in the crank 22 and in the rod 16.

When the pin 24 is secured to the bracket 30 in the further insertion position through the holes 49, 50, the fastening of the bracket 30 to the attachment portion 48 via the fastening device 32 results in the fastening of the rod 17 to the frame 5 or more precisely to the plate portion 8.

This corresponds to the blocking of the mechanism 12 with the platform 11 in the retracted configuration.

Indeed, the single degree of freedom of the mechanism 12 is eliminated here.

Figure 4 shows an emergency configuration of the step 4, in which the platform 11 is in the retracted configuration, and in which the rod 17 is fastened to the plate portion 8 via the fastening devices 31, 32, in the manner just described.

A transition from the operating configuration (for example illustrated in Figure 2) to the emergency configuration of the step 4 can comprise the following steps:
- detaching or releasing the fastening devices 31, 32, when the pin 24 is fastened in the insertion position through the crank 22 (Figure 2),
- sliding the pin 24 out of the holes in the crank 22 and the rod 16,
- placing the platform 11 in the retracted configuration via the mechanism 12, for example manually, and
- fastening the pin 24 to the bracket 30 in the further insertion position through the holes 49, 50 via the fastening device 31, and
- fastening the bracket 30 to the attachment portion 48 via the fastening device 32 (Figure 4).

The advantages of the retractable step 4 according to the invention are evident from the foregoing.

Indeed, the fastening devices 31, 32 are easy to manipulate for the user, i.e. they are readily detachable and reattachable, in particular manually and potentially without the use of tools.

In particular, the knob 38 and the clip 43 are realized ergonomically.

Moreover, the same devices 31, 32 can also be used for locking the mechanism 12 with the platform 11 in the retracted configuration in a simple and intuitive manner.

In addition, the arrangement of the plate portion 8 or of the frame 5 between the crank 22 and the rod 17 minimizes the possibility of hindering the operation of the mechanism 12.

Finally, it is clear that modifications and variations can be made to the retractable step 4 according to the present invention without thereby departing from the protective scope defined by the claims.

## Claims

1. Retractable step (4) for a vehicle (1), the retractable step (4) comprising:
- at least one platform (11) to facilitate a user's access to the interior of the vehicle (1),
- a frame (5) fixable to a lower body portion (2) of the vehicle (1),
- an articulated mechanism (12) comprising at least a first rod (15) fastened to the platform and a second rod (16) having a first and a second end (16a, 16b) hinged to the first rod (15) and the frame (5), respectively,
- a motor (13) carried by the frame (5) and configured to deliver power,
- a transmission (14) configured to transmit the power delivered by the motor (13) to the articulated mechanism (12), such that the articulated mechanism (12) moves the platform (11) relative to the frame (5),
wherein the transmission (14) comprises
- a shaft (19) rotatably supported by the frame (5) around a first axis (R1) and coupled to the motor (13) to be driven into rotation by said power,
- a crank (22) rotationally coupled to the shaft (19) to be driven into rotation by the shaft (19) around the first axis (R1),
- fastening means (23) configured to fastened the crank (22) to the second rod (16) in a releasable manner at a second axis (R6) parallel to and distinct from the first axis (R1).

2. Retractable step according to claim 1, wherein the fastening means (23) comprises
- a pin (24) configured to be arranged in an insertion position, in which the pin (24) is inserted through the crank (22) and the second rod (16) along a second axis (R2) parallel to the first axis (R1), and
- fastening devices (30, 31, 32) configured to fasten the pin (24) in the insertion position in a releasable manner.

3. Retractable step according to claim 2, wherein the fastening devices (31, 32) comprise
- a bracket (30) configured to be passed through along the second axis by the pin in the insertion position,
- a first fastening device (31) configured to releasably fasten the bracket (30) and the pin (24) passing through the bracket (30) in the insertion position to each other, and
- a second fastening device (32) configured to fasten the bracket (30) to the crank (22) in a releasable manner.

4. Retractable step according to claim 3, wherein the crank (22) is arranged between the bracket (30) and the second rod (16) when the first and second fastening devices (31, 32) respectively fasten the bracket (30) to the pin (24) in the insertion position and the bracket (30) to the crank (22).

5. Retractable step according to claim 3 or 4, wherein the pin (24) in the insertion position comprises an abutment portion (35) configured to rest against the bracket (30) along the second axis (R6), and an insertion portion (36) extending axially from the abutment portion (35) and configured to pass through the bracket (30) in a through manner along the second axis (R6) when the abutment portion (35) rest against the bracket (30), the insertion portion (36) having an external thread (37), whereby the first fastening device (31) comprises a knob (38) internally threaded and configured to mate with the external thread (37) to tighten the abutment portion (35) against the bracket (30), thereby fastening the pin (24) to the bracket (30).

6. Retractable step according to any one of claims 3 to 5, wherein the crank (22) comprises a base portion (40) and a body (41) protruding from the base portion (40) along a third axis (R7) parallel to the second axis (R6), wherein the second fastening device (32) comprises a clip (43) configured to secure the bracket (30) to the protruding body (41) via a snap fit coupling.

7. Retractable step according to any one of the preceding claims, wherein the articulated mechanism (12) comprises a third rod (17) having a third and a fourth end (17a, 17b) respectively hinged to the frame (5) and to one between the first rod (15) and the platform (11).

8. Retractable step according to claim 7, wherein the frame comprises a first plate portion (8) arranged between the second rod (16) and the third rod (17) according to a direction parallel to the first axis (R1).

9. Retractable step according to claim 7, when claim 6 depends on one of claims 2 to 5, wherein the third rod (17) forms together with the first plate portion (8) a fastening interface (47) when the platform (11) is arranged via the articulated mechanism (12) in a specific retracted configuration suitable for preventing the step (4) from protruding laterally relative to the vehicle (1) when the step (4) is mounted on the vehicle (1), the fastening interface (47) comprising
- a pair of holes (49, 50) aligned with each other along a fourth axis (R9) parallel to the second axis (R6) and respectively obtained on the first plate portion (8) and the third rod (17) so that they can both receive the pin (24) contemporarily, such that the pin (24) can be therein fastened to the bracket (30) via the first fastening device (31), and
- an attachment portion (48) carried in a fixed manner by the third rod (17) and configured to cooperate with the second fastening device (32) to fasten the bracket (30) to the third rod (17), thereby locking the articulated mechanism (12) with the platform (11) in said retracted configuration.

10. Vehicle (1) comprising a body (2), a passenger compartment or interior cabin carried by the body (2), a door (3) for access to the passenger compartment or interior cabin, and a retractable step (4) according to any of the preceding claims, the retractable step (4) being carried by the body (2) below the door (3).
